# EUROPÄISCHE PATENTSCHRIFT

(11) **EP 3 153 025 B1**
(45) Veröffentlichungstag und Bekanntmachung des Hinweises auf die Patenterteilung: **18.04.2018**
(21) Anmeldenummer: 16185676.0
(22) Anmeldetag: 25.08.2016
(51) Int. Cl.: A22C 11/00, B65B 19/34, B65B 35/24, B65B 35/36, B65B 35/44, B65B 43/52, B65G 47/08, B65G 47/52, B65G 47/06, B65G 47/84, B65B 5/06, B25J 11/00, B25J 9/00, B25J 15/10, B25J 15/02, B65B 35/46, B25J 15/00, B65G 17/12, B65G 47/22, B65G 47/32, B65G 47/90, B65G 47/14

(54) **VORRICHTUNG ZUM BEHANDELN EINZELNER WÜRSTE**
DEVICE FOR TREATING INDIVIDUAL SAUSAGES
DISPOSITIF DESTINE AU TRAITEMENT INDIVIDUEL DE SAUCISSE

(30) Priorität: 21.09.2015 DE 202015104994 U
(43) Veröffentlichungstag der Anmeldung: 12.04.2017
(73) Patentinhaber: Singer & Sohn GmbH, 92334 Berching (DE)
(72) Erfinder: SINGER, Manfred, 92334 Berching (DE); KOLLER, Dieter, 92360 Sulzbürg (DE)
(74) Vertreter: Lindner Blaumeier Patent- und Rechtsanwälte

(56) Entgegenhaltungen:
- EP-A1- 1 801 044
- EP-A1- 1 886 772
- EP-A1- 2 799 349
- DE-A1- 4 446 437
- DE-A1- 19 917 435
- US-A- 4 082 177
- US-A- 4 211 055
- US-A- 5 810 150
- US-A- 5 871 080
- US-A- 6 141 943
- US-A1- 2013 020 176
- US-A1- 2014 360 137

## Beschreibung

In der Wurstindustrie sind häufig einzelne Würste zu gruppieren und in Transport-oder Verpackungsbehälter einzulegen. Dies geschieht häufig händisch, das heißt, dass zumeist mehrere Personen an einem Förderband stehen, auf dem die vereinzelten, zum Teil vorgefrosteten Würste transportiert werden. Die Würste werden händisch gegriffen und eingelegt. Eine Person muss dabei bis zu 80 Würste pro Minute greifen und in die Verpackungs- oder Aufnahmebehältnisse einlegen, die sodann über eine entsprechende Verpackungsmaschine verschlossen werden. Dies ist einerseits sehr umständlich, andererseits aber auch körperlich beanspruchend. Denn die Arbeit wird üblicherweise in einer leicht nach vorne gebückten Haltung unter großem Leistungsdruck ausgeführt. Auch die niedrige Temperatur der oft vorgefrosteten Würste wirkt sich nachteilig auf diese Arbeit aus.

Aus DE 44 46 437 A1 ist eine Portioniervorrichtung bekannt, mit der Würste in Gruppen, dort "Paket" genannt, portioniert und anschließend mittels eines Greifers in einzelne Aufnahmebehältnisse überführt werden können. Die Portioniervorrichtung weist eine Sammelrinne auf, auf die die Würste in loser Schüttung aufgebracht werden. Von dort fallen die Würste auf eine Rüttelrinne, die die Würste durch entsprechende Bewegung ausrichtet und in eine Vielzahl einzelner, parallel zur Förderrichtung verlaufender Rinnen einbringt. Von der Rüttelrinne gelangen die Würste auf ein Transportband, dem ein Rahmen mit einer Vielzahl von Trennblechen zugeordnet ist. Diesem nachgeschaltet, oberhalb des Transportbands, ist eine Übergabeeinheit mit einem ortsfesten Anschlag, gegen den die über das Band antransportierten Würste laufe, vorgesehen.

Die Übergabeeinheit weist einen Querschieber auf, umfassend umlaufende Ketten mit entsprechenden Trennwänden. Über die Übergabeeinheit werden die Würste sodann auf ein Band übergeben über das sie zu einer Portionierstation transportiert werden. Am Ende dieses Bandes ist ein ortsfester Anschlag vorgesehen. Damit vor dem Anschlag des Bandes jeweils nur eine wählbare Anzahl von Würsten in Form eines Pakets anliegt, ist das Band zusätzlich mit einer Portioniereinrichtung ausgestattet, die die Gruppierung der Würste vornimmt, die also eine Gruppiereinrichtung ist. Diese Portioniereinrichtung umfasst zwei auf einer Welle angeordnete Scheiben auf, die der Querschnittsform der Würste entsprechende Ausnehmungen aufweist und über ein Zählwerk angetrieben werden. Mit Hilfe dieser Portioniereinrichtung kann somit jeweils eine bestimmte einstellbare Anzahl von Würsten, die ein Paket ergeben, von dem Band zu dem Anschlag gefördert werden. An dem Anschlag werden sodann die Würste mittels eines Greifers der Transportstation gegriffen und übernommen und in die einzelnen Aufnahmebehältnisse überführt.

Der Erfindung liegt damit das Problem zugrunde, eine Vorrichtung zum Behandeln einzelner Würste anzugeben, die es ermöglicht, dieses Gruppieren und Einbringen der Würste in Aufnahmebehältnisse zu verbessern.

Zur Lösung dieses Problems ist erfindungsgemäß eine Vorrichtung zum Behandeln einzelner Würste vorgesehen, umfassend
- eine Sortiereinrichtung umfassend ein in näherungsweise dreieckförmiger Geometrie umlaufendes, Stollen oder Mitnehmerschienen aufweisendes Förderband, auf dem die auf ein aufsteigend laufendes Trum des Förderbands in loser Schüttung aufgegebenen Würste einzeln in die Mitnehmerschienen verteilt werden,
- eine die sortierten Würste übernehmende umlaufende erste Fördereinrichtung mit Einzelstollen oder Mitnehmerschienen, wobei jeweils ein Einzelstollen oder Mitnehmerschiene eine Wurst aufnimmt,
- eine Gruppiereinrichtung, in der die von der ersten Fördereinrichtung antransportierten Würste zu Gruppen zusammengefasst werden,
- eine zweite Fördereinrichtung mit die Würste jeweils einer Gruppe aufnehmenden Aufnahmeabschnitten, in die die Würste nebeneinanderliegend von der Gruppiereinrichtung übergeben werden,
- eine Transfereinrichtung umfassend eine Greifereinrichtung zum Greifen einer Wurstgruppe und Übergeben und Einlegen der Wurstgruppe in ein Aufnahmebehältnis.

Die erfindungsgemäße mehrteilige Behandlungsvorrichtung ermöglicht ein automatisches Sortieren, Gruppieren und Transferieren der Würste in Aufnahmebehältnisse. Im Rahmen dieses Betriebes sind keine manuellen Tätigkeiten erforderlich, vielmehr ist ein vollautomatischer Betrieb möglich. Allenfalls ist eine Sichtkontrolle bezüglich der Unversehrtheit der Würste erforderlich.

Hierzu ist eine Sortiereinrichtung vorgesehen, in der die über eine entsprechende Zuführeinrichtung, beispielsweise ein Förderband aus einem Schütttrichter lose zugeführten, vereinzelten Würste sortiert werden. Hierzu ist ein dreieckförmiges Förderband vorgesehen, auf dem hintereinander eine Vielzahl einzelner Mitnehmerschienen vorgesehen sind. Die losen Würste werden auf dieses Förderband aufgegeben, und zwar auf ein aufsteigend laufendes Trum des Förderbandes, wo sie sich in die einzelnen Mitnehmerschienen oder Stollen verteilen. Im Idealfall ist in jeder Mitnehmerschiene oder jedem Stollen eine Wurst eingebracht, wobei, da die Würste wie beschrieben lose aufgegeben werden, mitunter die ein oder andere Schiene oder Stollen auch unbelegt bleibt. Sollte sich zufällig in einer Mitnehmerschiene oder einem Stollen zwei Würste einlegen, so kann über eine geeignete Abstreifereinrichtung die überzählige Wurst abgewiesen werden.

Über diese Sortiereinrichtung werden also die vereinzelt aufgegebenen Würste sortiert und auf die Mitnehmerschienen oder Stollen verteilt. Diese sortierten Würste werden sodann von dem Förderband auf eine umlaufende erste Fördereinrichtung übergeben. Diese weist eine Vielzahl hintereinander angeordneter Einzelstollen oder Mitnehmerschienen auf, wobei jeweils ein Einzelstollen oder Mitnehmerschiene zur Aufnahme einer Wurst ausgelegt ist. Die Fördereinrichtung dient dazu, die sortierten Würste zu einer nachgeschalteten Gruppiereinrichtung zuzufördern. In dieser Gruppiereinrichtung werden die übergebenen Würste zu Gruppen zusammengefasst, wobei die Gruppengröße parametrierbar ist. Das heißt, dass Gruppen mit vier, sechs, acht oder zehn Würsten je nach Bedarf definiert werden können und in der Gruppiereinrichtung gebildet werden können. Die Größe der gebildeten Gruppen hängt natürlich unmittelbar von der Größe der Aufnahmebehältnisse ab.

Nach erfolgter Gruppierung werden die Würste von der Gruppiereinrichtung an eine zweite Fördereinrichtung übergeben, die jeweils einer Gruppe zugeordnete, also eine Gruppe aufnehmende Aufnahmeabschnitte aufweist. In diesen Aufnahmeabschnitten liegen die Würste nebeneinander, sind also bereits exakt orientiert und ausgerichtet, so dass sie von einer der zweiten Fördereinrichtung zugeordneten Transfereinrichtung mit einer Greifereinrichtung gegriffen werden können und an ein Aufnahmebehältnis übergeben werden können. Die Greifereinrichtung greift die komplette Wurstgruppe, die in ihrer Gesamtheit transferiert wird. Nach dem Einlegen in das Aufnahmebehältnis wird dieses abtransportiert und z. B. entsprechend verschlossen.

Die erfindungsgemäße Vorrichtung lässt es folglich zu, die bereits vereinzelten, gegebenenfalls bereits vorgefrosteten Würste zu sortieren, zu gruppieren und zu transferieren, ohne dass hierzu irgendeine manuelle Tätigkeit erforderlich wäre. Auch ist die Vorrichtung ohne weiteres in der Lage, auch Würste zu behandeln, die nicht immer die gleiche Produktform aufweisen, was insbesondere bei Würsten im Naturdarm immer wieder vorkommt. Bei diesen ergeben sich häufig Schwankungen in den Produktabmessungen, beispielsweise durch Schwankungen im Darmkaliber, durch Unregelmäßigkeiten beim Befüllen oder durch Fehler bei der Wursttrennung. Da ein Naturdarm das Bestreben hat, in seine gekrümmte Ausgangsform zurückzugehen, können zu prozessierende Würste mitunter auch eine leichte gebogene Form aufweisen. All dies stellt für die erfindungsgemäße Vorrichtung kein Problem dar.

Wenngleich die Möglichkeit besteht, die in der Sortiereinrichtung in den Mitnehmerschienen oder Stollen aufgenommenen Würste unmittelbar am Ende des absteigend laufenden Trums des Förderbandes an die erste Fördereinrichtung zu übergeben, ist es zweckmäßig, wenn dies am Ende des horizontal verlaufenden Trums des Förderbandes erfolgt. Das heißt, dass die am aufsteigend laufenden Trum des Förderbandes aufgegebenen und sortierten Würste quasi einmal komplett umlaufen, wobei das aufsteigende Trum in entgegengesetzt der grundsätzlichen Förderrichtung der erfindungsgemäßen Vorrichtung läuft. Um zu vermeiden, dass die Würste aus den Mitnehmerschienen oder Stollen fallen, wenn sie vom absteigenden Trum in das horizontale Trum laufen, ist zweckmäßigerweise eine unterhalb des vorzugsweise im Wesentlichen horizontal verlaufenden Trums des Förderbandes angeordnete Führungseinrichtung für die in den nach unten offenen Mitnehmerschienen oder Stollen aufgenommenen Würste vorgesehen, über die die Würste bis zur Übergabe an die benachbart zu dem Trum angeordnete erste Fördereinrichtung geführt sind. Diese Fördereinrichtung kann beispielsweise ein feststehendes Blech sein oder ein in Förderrichtung umlaufender Gurt, was sich dann anbietet, wenn in einer Mitnehmerschiene oder einem Stollen nur eine Wurst aufgenommen ist, mithin also nur eine Wurstreihe gegeben ist. Die Würste können auf diesem Blech oder dem Band ohne weiteres längs transportiert werden und am Ende des horizontalen Trums in die Einzelstollen eingebracht werden.

Zur Steigerung des Durchsatzes ist es jedoch zweckmäßig, wenn die Mitnehmerschienen oder Stollen der Sortiereinrichtung länger als die zu sortierenden Würste sind, so dass mehrere Würste hintereinander in einer Mitnehmerschiene oder einem Stollen aufnehmbar sind, beispielsweise fünf, acht oder zehn Würste. In diesem Fall ist bevorzugt eine Verschiebeeinrichtung vorgesehen, mittels der die Würste einer Mitnehmerschiene oder eines Stollens zum Übergeben an die Fördereinrichtung längs der Mitnehmerschiene oder des Stollens verschiebbar sind. Diese Verschiebeeinrichtung ist in diesem Fall unterhalb des unteren, horizontalen Trums des Förderbandes angeordnet, das heißt, die Würste liegen, immer noch in den Mitnehmerschienen oder Stollen aufgenommen, auf dieser Verschiebeeinrichtung. Bei dieser handelt es sich beispielsweise um ein quer zur Bewegungsrichtung des Förderbandes laufendes Band oder einen entsprechenden Gurt, über den die mehreren Würste der Mitnehmerschienen (bevorzugt erstreckt sich diese Verschiebeeinrichtung nahezu über die gesamte Länge des unteren horizontalen Trums) definiert an eine Seite bewegt werden. Die Würste rutschen sowohl in Längs- als auch in Querrichtung über diese Verschiebeeinrichtung, grundsätzlich aber erfahren sie eine Verschiebekomponente in eine definierte Richtung. An der Schnittstelle des Förderbandes zur nachgeschalteten ersten Fördereinrichtung fällt sodann stets die jeweils vorderste Wurst der in Querverschiebungsrichtung gesehen vordersten Wurstreihe in jeweils einen Einzelstollen. Das heißt, dass stets die Würste dieser ersten Wurstreihe an die erste Fördereinrichtung übergeben werden und jede Einzelschiene oder jeder Stollen der ersten Fördereinrichtung befüllt wird. Die weiteren Würste der jeweiligen Mitnehmerschiene oder Stollens wandern erneut um, laufen also wieder auf das aufsteigend laufende Förderband Trum um. Beim nächsten Umlauf werden diese Würste nun, sofern nicht die erste Position zufälligerweise beim erneuten Einsortieren belegt ist, über die Verschiebeeinrichtung nach vorne geschoben und können sodann auf die erste Fördereinrichtung gebracht werden.

Die Verschiebeeinrichtung, die quasi gleichzeitig die Führungseinrichtung bildet, ist wie beschrieben bevorzugt als senkrecht zur Förderrichtung des unteren, horizontalen Trums umlaufendes Band oder Gurt ausgeführt. Hierzu wird bevorzugt ein Material verwendet, das eine möglichst geringe Reibung in Bezug auf die Würste respektive das äußere Wurstmaterial aufweist, beispielsweise PU.

Wie bereits beschrieben weist die Sortiereinrichtung zweckmäßigerweise eine Abstreifereinrichtung zum Abstreifen von überzähligen Würsten aus einer Mitnehmerschiene oder einem Stollen auf. Beim Aufgeben kann es sein, dass eine oder mehrere Würste bei längeren Mitnehmerschienen oder Stollen korrekt in die Schienen eingebracht sind, jedoch ein oder mehrere überzählige Würste auf diesen Würsten liegen. Die Abstreifereinrichtung streift diese überzähligen Würste ab, so dass sie nicht über den oberen Todpunkt des Förderbandes laufen und herunterfallen können. Als eine solche Abstreifereinrichtung kann beispielsweise ein rotierendes Paddel verwendet werden.

Die sortierten Würste werden sodann der ersten Fördereinrichtung zugeführt. Wenngleich sie bereits über die bevorzugt vorgesehene Verschiebeeinrichtung ausgerichtet sind, ist es zweckmäßig, wenn der ersten Fördereinrichtung eine Ausrichteinrichtung zum seitlichen Ausrichten der in den Einzelstollen aufgenommenen Würste zugeordnet ist. Hierüber ist es möglich, die einzelnen Würste definiert auszurichten und zu positionieren. Eine solche Ausrichteinrichtung kann ein oder bevorzugt zwei an beiden Seiten der Fördereinrichtung angeordnete, zahnradartige Drehräder aufweisen, das oder die mit an den Würsten angreifenden Ausrichtabschnitten in die Stollen eingreifen. Diese Drehräder, die bevorzugt nicht aktiv angetrieben sind sondern über das Förderband gedreht werden, greifen also mit ihren Ausrichtabschnitten an den entsprechenden Wurstenden an und verschieben die Würste bei Bedarf etwas nach links oder rechts im jeweiligen Einzelstollen oder der Mitnehmerschiene, so dass nach Durchlauf durch diese Ausrichteinrichtung alle Würste weitgehend exakt positioniert sind.

Von der ersten Fördereinrichtung werden die Würste wie beschrieben der Gruppiereinrichtung zugeführt. In dieser werden definierte, in der Anzahl parametrierbare Gruppen gebildet. Hierzu kann die Gruppiereinrichtung wenigstens eine um eine senkrecht zur Förderrichtung der ersten Fördereinrichtung drehend antreibbare Trommel aufweisen, in die die eine Gruppe bildenden Würste von der Fördereinrichtung gegeben werden und aus der die Würste in den jeweiligen Aufnahmeabschnitt der nachgeschalteten, zweiten Fördereinrichtung gegeben werden. Bevorzugt sind zwei um dieselbe Achse drehende, hintereinander geschaltete und separat antreibbare Trommeln vorgesehen, die bevorzugt jeweils über einen Servoantrieb aktiv gedreht und positioniert werden können, und die auf diese Weise nacheinander befüllt werden können. Ist die eine Trommel befüllt und dreht sie in die Übergabeposition, so kann die nächste Trommel bereits in die Aufnahmeposition gebracht werden und befüllt werden.

Bevorzugt ist der oder den Trommeln ein feststehender, bogenförmiger Führungsabschnitt zugeordnet, wobei die nacheinander an die Trommeln übergebene Würste sich hintereinander zwischen der Trommel und dem Führungsabschnitt aneinander reihen. Die Würste werden folglich nicht quasi hintereinanderliegend in die Trommel eingebracht, sondern in definierter Anordnung hintereinanderliegend in einen Aufnahmeraum zwischen der Trommel und dem Führungsabschnitt eingebracht. Die Trommel, die ein bogenförmiges Äußeres und einen oder mehrere untere und oberen, radial vorspringende Mitnehmerabschnitte aufweist und der bogenförmige Führungsabschnitt definieren diesen Aufnahmeraum. Zur Aufnahme wird die Trommel so positioniert, dass der Aufnahmeabschnitt offen ist und die erste Wurst in ihn einfällt und auf dem unteren Mitnehmer aufliegt. Sodann werden nacheinander die weiteren Würste in diesen Aufnahmeraum an der Trommel eingegeben. Ist die gewünschte Wurstanzahl aufgegeben, so dreht die Trommel relativ zum Führungsabschnitt. Die Würste werden mitgenommen, wobei der obere Mitnehmer dafür sorgt, dass sie, sollte die eine oder andere Wurst leicht anhaften, definiert mitgeführt wird. Vom bogenförmigen Führungsabschnitt geführt werden die Trommeln sodann am unteren Auslauf in den Aufnahmeabschnitt der zweiten Fördereinrichtung übergeben.

Besonders zweckmäßig ist es dabei, wenn die Trommel während der Wurstaufgabe getaktet dreht, bis alle Würste aufgenommen sind, wonach sie zur Abgabe der Würste weiterdreht. Das heißt, mit jeder aufgenommenen Wurst dreht die Trommel ein definiertes Winkelinkrement weiter, bis alle Würste aufgenommen sind. Um einerseits sicherzustellen, dass jede einzelne, aufzunehmende Wurst erfasst wird und diese getaktete Trommelbewegung entsprechend gesteuert werden kann und zum anderen, dass die gewünschte Wurstanzahl erreicht ist, ist zweckmäßigerweise der ersten Fördereinrichtung ein Sensor zur Erfassung des Beladungszustands der Einzelstollen oder Mitnehmerschienen zugeordnet, wobei der Antrieb der oder beider Trommeln in Abhängigkeit des Erfassungsergebnisses steuerbar ist. Eine entsprechende Steuerungseinrichtung - die bevorzugt den Betrieb der gesamten Vorrichtung steuert - steuert folglich in Abhängigkeit der Sensorerfassung den entsprechenden Trommeldrehbetrieb. Grundsätzlich steuert die Steuerungseinrichtung natürlich auch bevorzugt als übergeordnete Steuerung den Betrieb der anderen beweglichen Komponenten oder Motoren, so dass diese in ihrer Fördergeschwindigkeit etc. aufeinander abgestimmt respektive synchronisiert sind.

Der bogenförmige Führungsabschnitt mündet wie beschrieben bevorzugt oberhalb der zweiten Fördereinrichtung, so dass die einzelnen, hintereinander angeordneten Würste der Reihe nach hintereinander in die Aufnahmebereiche der zweiten Fördereinrichtung übergeben werden.

Der zweiten Fördereinrichtung ist schließlich die Transfereinrichtung zugeordnet, bei der es sich bevorzugt um einen Delta-Roboter handelt. Ein solcher hängend montierter Delta-Roboter besteht aus drei oder vier versetzten Armsystemen, bestehend jeweils aus einem Ober- und einem Unterarm. Die Oberarme werden mittels separater Motoren, die an der Grundplatte angeordnet sind, entsprechend bewegt. An den Unterarmen ist wiederum eine Arbeitsplatte angeordnet, an der die entsprechende Greifereinrichtung im Falle der erfindungsgemäßen Vorrichtung angeordnet ist. Ein solcher Delta-Roboter lässt eine sehr exakte Bewegung der Greifereinrichtung zu, die dabei lediglich vertikal und horizontal bewegt wird, um einerseits die Wurstgruppe greifen zu können, und sie andererseits horizontal transferieren zu können.

Hierzu weist die Greifereinrichtung vier in rechteckiger Anordnung positionierte Greifelemente zum Greifen der eine rechteckige Grundform aufweisenden Wurstgruppe auf, wobei wenigstens drei Greifelemente schwenkbar sind. Die Greifeinrichtung wird über den Delta-Roboter oberhalb der Wurstgruppe positioniert und vertikal abgesenkt, wonach die wenigstens drei, gegebenenfalls auch die vier Greifelemente über entsprechende Antriebsmotoren verschwenkt werden, so dass sie an den Seiten der Wurstgruppe angreifen und diese packen können. Sodann wird über den Delta-Roboter die Greifeinrichrichtung etwas angehoben, so dass das Wurstpaket aus dem Aufnahmeabschnitt der zweiten Fördereinrichtung entnommen wird, woran sich die horizontale Verschiebebewegung anschließt, mit der die Wurstgruppe oberhalb des Aufnahmebehältnisses positioniert wird. Mit einer kurzen vertikalen Absenkbewegung wird die Wurstgruppe in das Aufnahmebehältnis eingelegt, wonach die beweglichen Greifelemente wieder aufgeschwenkt und die Wurstgruppe endgültig übergeben wird.

Für ein sicheres und gutes Greifen respektive Untergreifen der Wurstgruppe weisen die Greifelemente bevorzugt jeweils mehrere gebogene Greifabschnitte auf. Dabei können die beiden einander gegenüberliegend angeordneten Greifelemente, die an den Enden der Würste angreifen, eine der Wurstanzahl entsprechende Anzahl an solchen gebogenen Greifabschnitten aufweisen. Das heißt, dass jede Wurst quasi einzeln über einen solchen Greifabschnitt, einigermaßen formkompatibel, gegriffen wird, so dass eine sichere Mitnahme gewährleistet ist. Die an den beiden äußeren Würsten angreifenden Greifabschnitte können ebenfalls entsprechend gebogen ausgeführt sein, so dass auch sie diese Würste gut untergreifen können.

Weitere Vorteile und Einzelheiten der Erfindung ergeben sich aus dem im Folgenden beschriebenen Ausführungsbeispiel sowie anhand der Zeichnungen. Dabei zeigen.
- Fig. 1: eine Seitenansicht einer erfindungsgemäßen Vorrichtung,
- Fig. 2: eine Aufsicht der Vorrichtung aus Fig. 1,
- Fig. 3: eine vergrößerte Perspektivansicht einer der Sortiereinrichtung vorgeschalteten Zuführeinrichtung,
- Fig. 4: eine perspektivische Teilansicht der Sortiereinrichtung mit Blick auf das die von der Zuführeinrichtung zugeführten Würste aufnehmende Trum,
- Fig. 5: eine Perspektivansicht der anderen Seite der Sortiereinrichtung aus Fig. 4,
- Fig. 6: eine Prinzipdarstellung des in dreieckförmiger Geometrie umlaufenden, Mitnehmerschienen aufweisenden Förderbandes der Sortiereinrichtung,
- Fig. 7: eine vergrößerte Detailansicht des Übergabebereichs der Würste von dem Förderband der Sortiereinrichtung auf die erste Fördereinrichtung,
- Fig. 8: eine Perspektivansicht der ersten Fördereinrichtung mit nachgeschalteter Gruppiereinrichtung,
- Fig. 9: eine vergrößerte Detailansicht des Übergabebereichs der Würste von der ersten Fördereinrichtung an die Gruppiereinrichtung,
- Fig. 10: eine vergrößerte Detailansicht des Übergabebereichs der Würste von der Gruppiereinrichtung zur zweiten Fördereinrichtung,
- Fig. 11: eine Perspektivdarstellung der Transfereinrichtung umfassend einen Delta-Roboter, und
- Fig. 12: eine vergrößerte Darstellung der Greifereinrichtung der Transfereinrichtung aus Fig. 11.

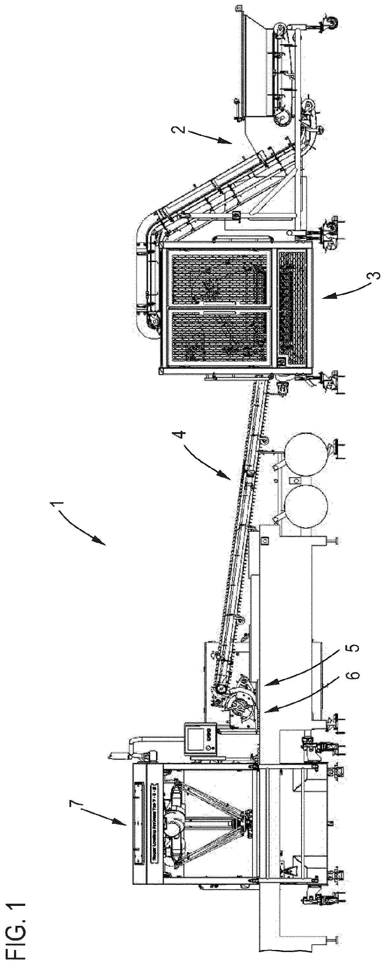

Fig. 1 zeigt eine erfindungsgemäße Vorrichtung 1 zum Behandeln einzelner Würste. Die Vorrichtung 1 umfasst eine Zuführeinrichtung 2, eine dieser nachgeschaltete Sortiereinrichtung 3, eine dieser nachgeschaltete erste Fördereinrichtung 4, eine dieser nachgeschaltete Gruppiereinrichtung 5, eine dieser nachgeschaltete zweite Fördereinrichtung 6 sowie eine wiederum dieser nachgeschaltete Transfereinrichtung 7. Die einzelnen Einrichtungen werden nachfolgend im Detail näher beschrieben. Sie werden bevorzugt über eine gemeinsame Steuerungseinrichtung gesteuert. Mit der Vorrichtung 1 ist es möglich, die regellos aufgegebenen, vereinzelten Würste zu sortieren, auszurichten, Gruppen mit definierter Wurstanzahl zu bilden, sowie diese Wurstgruppen in Aufnahmebehältnisse zu transferieren.

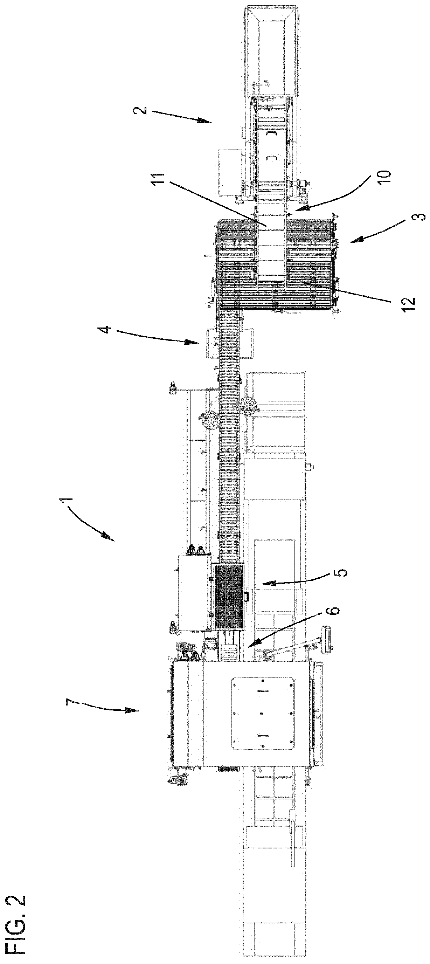

Fig. 2 zeigt eine Aufsicht auf die Vorrichtung 1 aus Fig. 1, in der wiederum die einzelnen Einrichtungen zu erkennen sind.

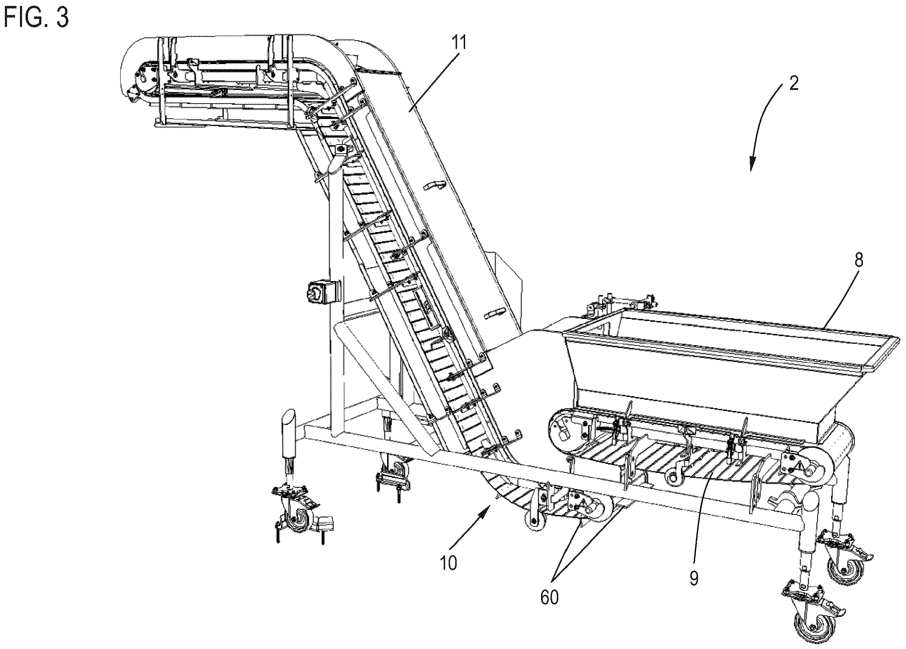

Fig. 3 zeigt in einer vergrößerten Detailansicht die Zuführeinrichtung 2. Diese umfasst eine Schütte 8, in die die vereinzelten, losen Würste aufgegeben werden. Über ein Förderband 9 werden die Würste aus der Schütte 8 abgezogen und auf ein Transportband 10 gegeben, welches über geeignete Stollen oder Mitnehmer 60 verfügt, so dass die Würste mitgenommen werden. Das Transportband 10 ist ansteigend ausgelegt, es erstreckt sich mit seinem oberen Ende, siehe Fig. 2, in einen Bereich oberhalb der Sortiereinrichtung 3, so dass die vom Transportband 10 abgegebenen, herunterfallenden Würste dem Förderband der Sortiereinrichtung zugeführt werden. Die Zuführeinrichtung 1 weist einen abgedeckten Förderkanal 11 auf, das heißt, dass das Obertrum des Transportbandes 10 eingehaust ist, so dass die Würste nicht freiliegend transportiert werden können und verhindert wird, dass sie herunterfallen können.

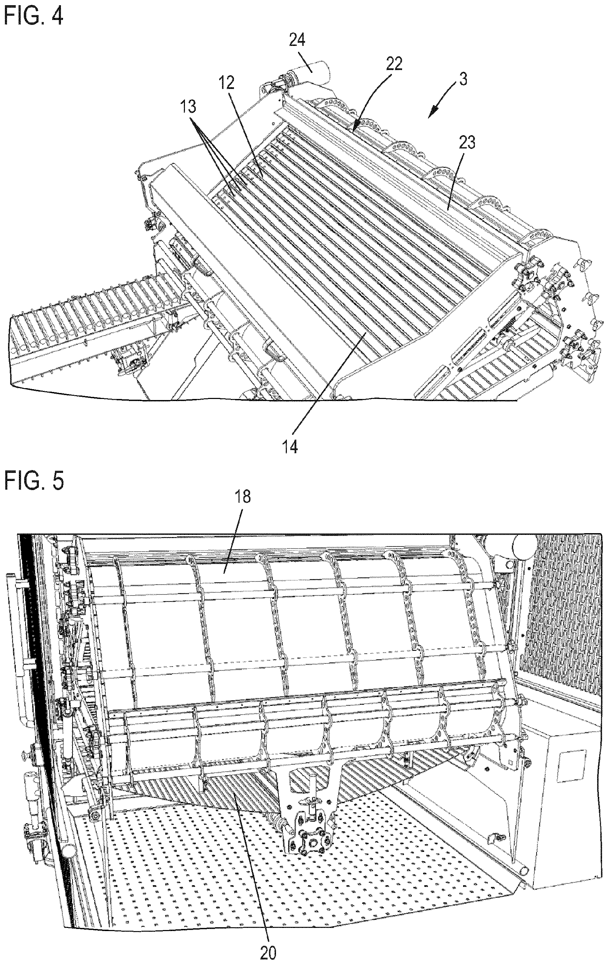

Die zugeführten Würste fallen auf ein Förderband 12 der in den Fig. 4 und 5 gezeigten Sortiereinrichtung 3. Das Förderband 12 weist an seiner Außenseite eine Vielzahl einzelner Mitnehmerschienen 13 auf, die deutlich länger sind als eine Wurst üblicherweise lang ist, so dass in eine solche Förderschiene mehr als eine Wurst, im gezeigten Beispiel exemplarisch ca. 8-10 Würste, aufgenommen werden. Aus Fig. 2 ist die Länge der Mitnehmerschienen 13 des Förderbandes 12 im Vergleich zur Breite der nachgeschalteten erste Fördereinrichtung 4, auf der die vereinzelten Würste weitertransportiert werden, gut zu erkennen.

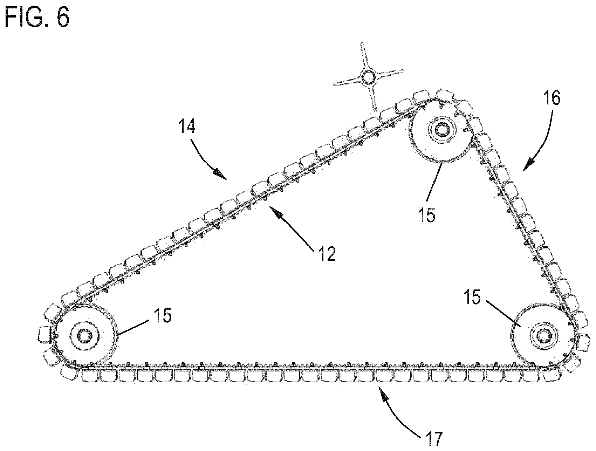

Das Förderband 12 läuft mit dem in Fig. 4 gezeigten Trum 14 nach oben, das heißt, die Transportrichtung der Würste in den Mitnehmerschienen 13 ist bei diesem Obertrum 14 quasi entgegengesetzt zur Zuführrichtung. Das Förderband 12, das - siehe Fig. 6 - ein im Wesentlichen dreieckige Geometrie aufweist, ist über drei Umlenkrollen 15 geführt. Das aufsteigende Obertrum 14 wird über die obere Umlenkrolle 15 umgelenkt, es geht in ein zweites Obertrum 16 über. Dieses Obertrum 16 ist über eine untere rechte Umlenkrolle 15 umgelenkt und geht in ein horizontal verlaufendes Untertrum 17 über, das über die linke Umlenkrolle wieder in das Obertrum 14 übergeht.

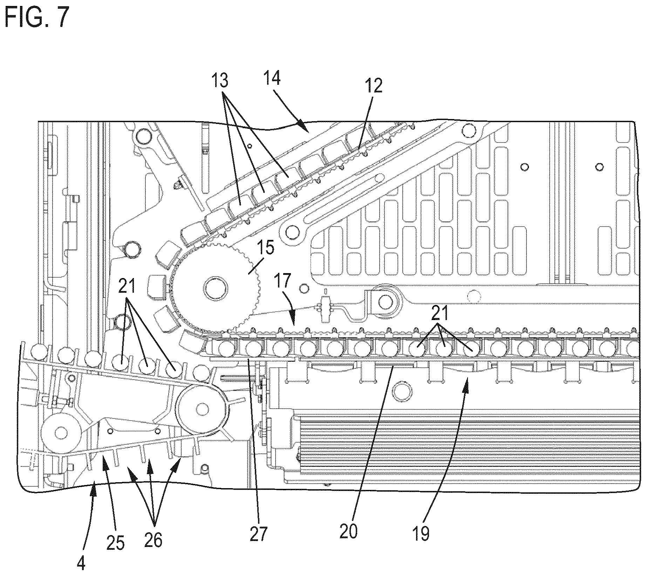

Um zu verhindern, dass die in den Mitnehmerschienen 13 aufgenommenen Würste beim Übergang zum Obertrum 16 herausfallen können, ist an dieser Seite eine Einhausung 18 vorgesehen, siehe hierzu Fig. 5. Diese läuft eng benachbart zum Förderband 12 respektive zum Obertrum 16, so dass die Würste nicht herausfallen können. Die Einhausung 18 erstreckt sich auch um den Umlenkbereich um die rechte untere Umlenkrolle 15, so dass auch dort die Würste sicher geführt sind. Unterhalb des horizontalen Untertrums 17 ist - siehe hierzu Fig. 7 - eine Verschiebeeinrichtung 19 umfassend ein Verschiebeband oder einen Verschiebegurt 20 vorgesehen, das oder der einerseits dazu dient, die in den nach unten offenen Mitnehmerschienen 13 des Untertrums 17 aufgenommenen Würste aufzulagern und abzustützen, so dass sie nicht herausfallen, wie Fig. 7 deutlich zeigt. Zum anderen dient die Verschiebeeinrichtung dazu, die Würste 21, die in Fig. 7 gezeigt sind, in Richtung des in Förderrichtung gesehen rechten Endes des Förderbandes 12 zu schieben. Das heißt, dass die Förderrichtung des Verschiebebandes 20 senkrecht zur Förderrichtung des Förderbandes 12 liegt. Die Würste 21 gleiten über das Verschiebeband oder den Verschiebegurt 20, das oder der bevorzugt aus PU ist. Über diese Verschiebeeinrichtung 19 wird sichergestellt, dass die Würste 21 kontinuierlich in Richtung des rechten Endes des Förderbandes 12 bewegt werden, an das sich, siehe Fig. 2, die erste Fördereinrichtung 4 anschließt, so dass dortseits eine einwandfreie Übergabe möglich ist.

Wie beschrieben werden über die Zuführeinrichtung 2 die Würste regellos auf das Obertrum 14 des Förderbandes 12 gegeben. Auf diesem verteilen sie sich beliebig. Manche Würste fallen direkt in eine Mitnehmerschiene 13, manche liegen quer dazu, mitunter liegen Würste übereinander etc. Um die Würste abzustreifen ist eine Abstreifeinrichtung 22 vorgesehen, umfassend ein drehbares Paddel 23, das über einen Antriebsmotor 24 angetrieben wird. Dieses rotiert entgegengesetzt der Bewegungsrichtung des Obertrums 14, so dass nicht korrekt in einer Mitnehmerschiene 13 aufgenommene Würste nach unten abgestriffen werden und dort idealerweise in eine Mitnehmerschiene 13 fallen. Unabhängig davon, wo nun die Würste in den einzelnen Mitnehmerschienen 13 konkret positioniert sind, ist über die Verschiebeeinrichtung 19 respektive das Förderband oder der Fördergurt 20 sichergestellt, dass die Würste in jedem Fall in Richtung des hinteren rechten Endes des Förderbandes 12 bewegt werden. Denn die Länge des Untertrums 17 ist hinreichend, damit bei entsprechender Bewegungsgeschwindigkeit des Förderbandes oder Fördergurtes 20 die Würste, selbst wenn sie in einem mittleren oder einem linken Bereich liegen würden, zum rechten Ende bewegt werden. Üblicherweise liegen bereits mehrere Würste in einer Mitnehmerschiene 13, so dass der Verschiebeweg nicht allzu lang ist.

Fig. 7 zeigt den Übergabebereich der Würste 21 von der Sortiereinrichtung 3 zur ersten Fördereinrichtung 4. Die erste Fördereinrichtung 4 umfasst ein umlaufendes Förderband 25 mit einer Vielzahl von Einzelstollen 26, wie Fig. 7 augenscheinlich zeigt. Jeder Einzelstollen dient der Aufnahme einer einzelnen Wurst 21. Die Würste 21 werden über das Förderband 12 nach Ausrichtung respektive korrekter Positionierung über die Verschiebeeinrichtung 19 antransportiert. Vom Förderband oder Fördergurt 20 gelangen die Würste 21 auf ein Übergabeblech 27, das soweit geführt ist, dass es genau oberhalb eines Einzelstollens 26 mündet, wie Fig. 7 zeigt. Da die Fördergeschwindigkeit des Förderbandes 12 und die Fördergeschwindigkeit des Förderbandes 25 miteinander synchronisiert sind, ist sichergestellt, dass eine herabfallende Wurst 21 genau in einen Einzelstollen 26 fällt.

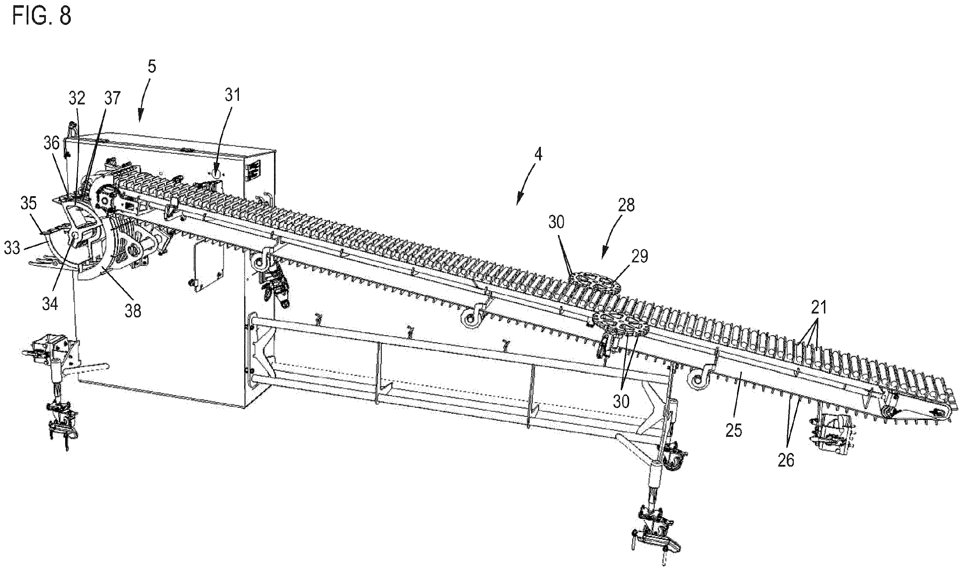

Fig. 8 zeigt in einer vergrößerten Darstellung die Fördereinrichtung 4 mit dem Förderband 25, wobei in den Einzelstollen 26 überall Würste 21 aufgenommen sind. Das Förderband 25 ist über nicht näher gezeigte Motoren, vorzugsweise Servoantriebe, angetrieben, entsprechendes gilt natürlich für das Förderband 12 sowie die Verschiebeeinrichtung 19.

An der Oberseite des Förderbandes 25 ist eine Ausrichteinrichtung 28 in Form zweier zahnradartiger Drehräder 29 vorgesehen, die an den gegenüberliegenden Bandenden angeordnet sind. Die Drehräder 29 weisen vorsprungartige radiale Ausrichtabschnitte 30 auf, die jeweils in die Einzelstollen 26 eingreifen. Über diese Ausrichtabschnitte ist sichergestellt, dass jede Wurst 21 weitgehend mittig im jeweiligen Einzelstollen 26 positioniert ist.

Der ersten Fördereinrichtung 4 respektive dem Förderband 25 ist ein Sensor 31 zur Erfassung der Belegung der jeweiligen Einzelstollen 26 zugeordnet. Über diesen Sensor wird also erfasst, ob eine Wurst 21 in einem Einzelstollen ist oder nicht. Dies ist erforderlich, um die Würste zur Gruppenbildung zu zählen und um die nachgeschaltete Gruppiereinrichtung 5 entsprechend anzusteuern. Diese Gruppiereinrichtung 5 umfasst im gezeigten Beispiel zwei Trommeln 32, 33, die um eine gemeinsame Drehachse 34 drehen und über separate Antriebe, wiederum beispielsweise Servomotoren, angetrieben werden. Jede Trommel 32 erstreckt sich um ein Winkelinkrement von etwas mehr als 90°. Sie weist einen oder mehrere untere Mitnehmerabschnitte 35 sowie einen oder mehrere obere Mitnehmerabschnitte 36 auf. Zwischen diesen Abschnitten verläuft ein oder verlaufen mehrere bogenartige Trommelabschnitte 37. Den Trommeln zugeordnet ist ein bogenförmiger Führungsabschnitt 38, der positionsfest ist und der benachbart zu den Trommeln 32, 33 angeordnet ist.

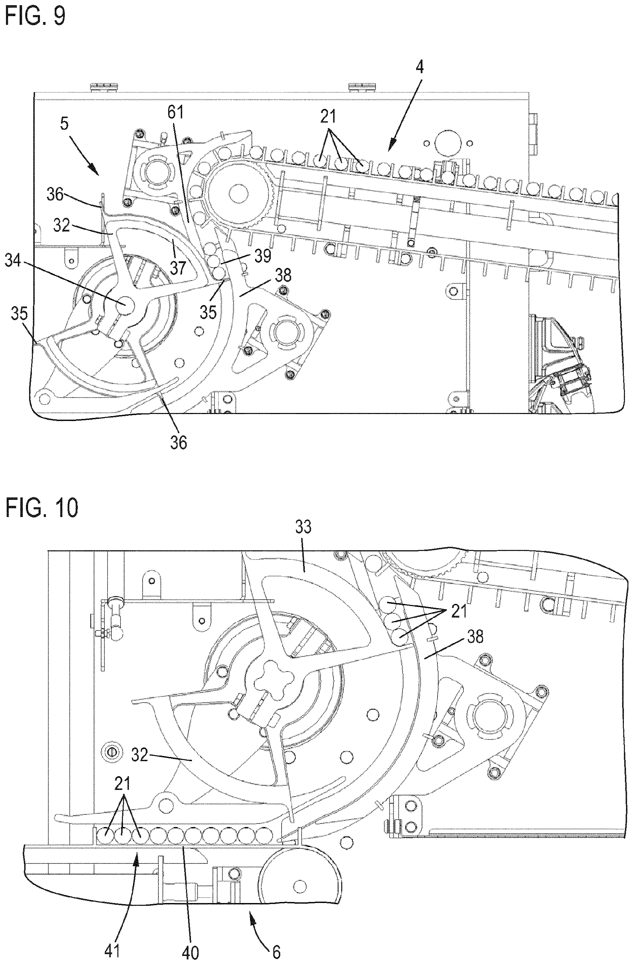

Fig. 9 zeigt den Übergabevorgang der Würste 21 von der ersten Fördereinrichtung 4 zur Gruppiereinrichtung 5. In der Übergabeposition befindet sich im gezeigten Beispiel die Trommel 32 bereits teilweise überlappend zum bogenförmigen Führungsabschnitt 38. Der Mitnehmer 35 dient als untere Wurstauflage. Zwischen dem Führungsabschnitt 38 und den Trommelabschnitten 37 bildet sich ein bogenförmiger Aufnahmekanal 39, wie Fig. 9 zeigt. In diesen fallen die abgegebenen einzelnen Würste 21, geführt über einen weiteren positionsfesten Abschnitt 61, der das Förderband 25 im Umlenkbereich umgreift und sich noch etwas in Richtung der Trommeln erstreckt.

Während dieses Befüllvorgangs wird die jeweilige Trommel, in Fig. 9 die Trommel 32, getaktet etwas weitergedreht, das heißt, dass über den entsprechenden Servomotor die Trommel 32 inkrementell mit jeder aufgenommenen Wurst 21 etwas weiterbewegt wird, so dass der Aufnahmekanal 39 schrittweise mit der geforderten Wurstanzahl gefüllt wird. Diese Taktung wird über den Sensor 31 gesteuert. Denn über diesen wird der jeweilige Belegungszustand eines Einzelstollens 26 erfasst. Ist ein Stollen nicht belegt, so wird zwangsläufig keine Wurst 21 in den Aufnahmekanal 39 übergeben, weshalb eine Taktung der Trommel 32 unterbleibt. Darüber hinaus wird über den Sensor 31 natürlich erfasst, ob die geforderte Wurstanzahl übergeben wurde oder nicht.

Ist die vordefinierte Wurstanzahl im Aufnahmekanal 39 aufgenommen, so wird über den zugeordneten Antriebsmotor die Trommel 32 nach unten geschwenkt, das heißt, sie bewegt sich entlang des feststehenden Führungsabschnitts 38. Die aufgenommenen Würsten 21 werden in den bogenförmigen Aufnahmekanal 39 mit nach unten genommen. Eine etwaige anhaftende Wurst wird über den nachlaufenden Mitnehmer 36 zwangsläufig mitgenommen.

Der bogenförmige Führungsabschnitt 38 mündet oberhalb der zweiten Fördereinrichtung 6, die in Fig. 10 angedeutet ist. Diese zweite Fördereinrichtung 6 weist ein Förderband 40 mit einer Vielzahl daran ausgebildeten Aufnahmeabschnitten 41 auf, in die jeweils eine Wurstgruppe umfassend die definierte Anzahl an Würsten 21 eingegeben wird. Das Förderband 40 ist in seiner Bewegung mit der Bewegung der Trommel 32, 33 synchronisiert. Dreht also die jeweilige Trommel 32, 33 nach Aufgabe der geforderten Wurstanzahl in den Aufnahmekanal 39 nach unten weg, so wird automatisch auch das Förderband 40 angesteuert, so dass der Aufnahmeabschnitt 41 in eine Übernahmeposition läuft. Die Bewegungen sind insoweit synchronisiert, so dass die einzelnen Würste 21 nacheinander den Führungsabschnitt 38 verlassen und hintereinander in den Aufnahmeabschnitt 41 hineinrollen. Mit dem Wegdrehen der soeben befüllten Trommel wird umgehend die zweite Trommel in die Aufnahmestellung, wie exemplarisch in Fig. 9 gezeigt, gedreht, so dass die nächste Wurstgruppe gebildet werden kann. Der Bewegungsbetrieb der Trommeln ist unabhängig voneinander, sie werden also separat gesteuert. In Fig. 10 sei angenommen, dass die zuvor gemäß Fig. 9 befüllte Trommel 32 in die Abgabeposition gedreht wurde, das heißt, dass die von ihr aufgenommenen Würste 21 soeben in den Aufnahmeabschnitt 41 bewegt wurden, während die zweite Trommel 33 in die Übergabeposition gedreht wurde.

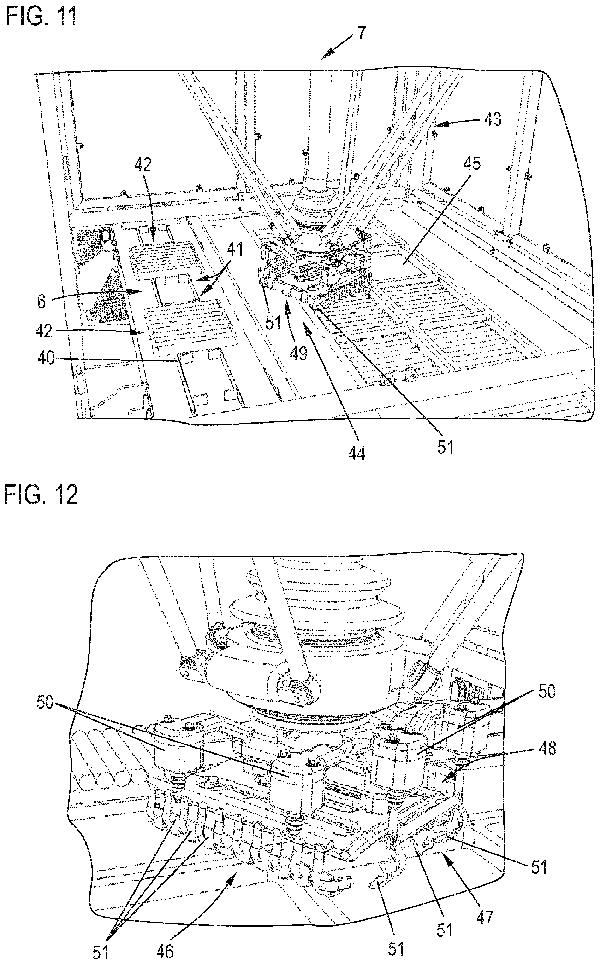

Die zweite Fördereinrichtung 6, die in Fig. 11 nochmals gezeigt ist, weist wie beschrieben eine Vielzahl separater Aufnahmeabschnitte 41 auf, die, wie Fig. 11 zeigt, hintereinander und voneinander beabstandet angeordnet sind. In jeder befindet sich eine Wurstgruppe 42 bestehend aus der definierten Wurstanzahl. Die Fördereinrichtung 6 respektive das Förderband 40 bringt nun diese einzelnen Wurstgruppen 42 in den Arbeitsbereich der Transfereinrichtung 7, die als Delta-Roboter 43 ausgeführt ist. Die Funktionsweise eines Delta-Roboters ist hinlänglich bekannt und muss nicht näher erläutert werden.

Die Transfereinrichtung 7 respektive der Delta-Roboter 43 umfasst eine Greifereinrichtung 44, die dazu dient, die einzelnen Wurstgruppen 42 komplett zu greifen und zu transferieren, so dass sie in separate Aufnahmebehältnisse 45 übergeben werden können, die sodann einer Verpackungsmaschine zugeführt werden, wo die einzelnen Wurstgruppen 42 endgültig verpackt werden.

Zu diesem Zweck weist die Greifereinrichtung vier in Rechteckform angeordnete Greifelemente 46, 47, 48, 49 (vgl. die Fig. 11 und 12) auf. Wenigstens drei dieser Greifelemente 46 - 49 sind über separate Antriebsmotoren 50 schwenkbar, können also zu der Wurstgruppe 42 hin und von dieser weg geschwenkt werden. Ein Greifelement kann feststehend sein.

Die Greifelemente weisen jeweils eine Vielzahl gebogener Greifabschnitte 51 auf, wie die Fig. 11 und 12 zeigen. Dabei sind die Greifelemente 47 und 49 mit nur wenigen, im gezeigten Beispiel drei Greifabschnitten 51 versehen. Diese Greifelemente 47 und 49 greifen an den Längsseiten der Wurstgruppe 42 an, also an den beiden außenliegenden Würsten 21. Hier ist es ausreichend, die Würste nur punktuell zu greifen.

Die Greifelemente 46 und 48 hingegen weisen eine Vielzahl separater Greifelemente 51 auf, die Anzahl der Greifelemente 51 entspricht der Anzahl der die Wurstgruppe 42 bildenden Würste 21. Diese Greifelemente 51 greifen an den vorderen und hinteren Wurstenden der einzelnen Würste 21 an. Das heißt, dass jede Wurst 21 an ihren Enden mittels der Greifelemente 46 und 48 gegriffen wird, während über die Greifelemente 47 und 49 nur die beiden außenliegenden Würste 21 über ihre Länge gegriffen werden.

Zum Greifen einer Wurstgruppe 42 wird die Greifeinrichtung 44 in eine Position oberhalb der Wurstgruppe 42 bewegt. Die beweglichen Greifelemente werden aufgeschwenkt. Anschließend wird über den Delta-Roboter 43 die Greifeinrichtung 44 abgesenkt. Ist die Greifstellung erreicht, werden die wenigstens drei beweglichen Greifelemente wieder eingeschwenkt, so dass die Wurstgruppe 42 in der zuvor beschriebenen Weise gegriffen wird. Anschließend wird die Wurstgruppe 42 mittels des Delta-Roboters 43 angehoben und exakt über ein Aufnahmebehältnis 45 bewegt. Ist die Wurstgruppe 42 exakt oberhalb des Aufnahmebehältnisses 45 positioniert, wird die Greifeinrichtung 44 wieder abgesenkt. Mit Erreichen der Endposition werden die beweglichen Greifelemente wieder geöffnet, so dass die Wurstgruppe 42 in das Aufnahmebehältnis 45 abgegeben wird. Die geöffnete Greifeinrichtung fährt sodann wieder in Richtung der zweiten Fördereinrichtung 6, um die nächste Wurstgruppe 42 zu greifen und zu transferieren. Auch die Bewegung der hier arbeitenden relevanten Teile, nämlich zweite Fördereinrichtung 6, Delta-Roboter 4 respektive Greifeinrichtung 44 und Aufnahmebehältnisse 45, die an einem geeignetem Förderband angeordnet sind, sind selbstverständlich synchronisiert.

Nach Befüllen der Aufnahmebehältnisse 45 werden diese mittels des Förderbandes, auf dem sie angeordnet sind, oder Teil dessen sie sind, abtransportiert und einer Verpackungseinrichtung zugeführt, wo die endgültige Verpackung der Wurstgruppen erfolgt.

## Patentansprüche

1. Vorrichtung zum Behandeln einzelner Würste, umfassend
- eine Sortiereinrichtung (3) umfassend ein in näherungsweise dreieckförmiger Geometrie umlaufendes, Stollen oder Mitnehmerschienen (13) aufweisendes Förderband (12), auf dem die auf ein aufsteigend laufendes Trum (14) des Förderbands (12) in loser Schüttung aufgegebenen Würste (21) einzeln in die Stollen oder Mitnehmerschienen (13) verteilt werden,
- eine die sortierten Würste (21) übernehmende umlaufende erste Fördereinrichtung (4) mit Einzelstollen (26) oder Mitnehmerschienen, wobei jeweils ein Einzelstollen (26) oder eine Mitnehmerschiene eine Wurst (21) aufnimmt,
- eine Gruppiereinrichtung (5), in der die von der ersten Fördereinrichtung (4) antransportierten Würste (21) zu Gruppen (42) zusammengefasst werden,
- eine zweite Fördereinrichtung (6) mit die Würste (21) jeweils einer Gruppe (42) aufnehmenden Aufnahmeabschnitten (41), in die die Würste (21) nebeneinanderliegend von der Gruppiereinrichtung (5) übergeben werden,
- eine Transfereinrichtung (7) umfassend eine Greifereinrichtung (44) zum Greifen einer Wurstgruppe (42) und Übergeben und Einlegen der Wurstgruppe (42) in ein Aufnahmebehältnis (45).

2. Vorrichtung nach Anspruch 1, **dadurch gekennzeichnet, dass** eine unterhalb des vorzugsweise im Wesentlichen horizontal verlaufenden Trums (17) des Förderbands (12) angeordnete Führungseinrichtung für die in den nach unten offenen Mitnehmerschienen (13) oder Stollen aufgenommenen Würste (21) vorgesehen ist, über die die Würste (21) bis zur Übergabe an die benachbart zu dem Trum (17) angeordnete erste Fördereinrichtung (4) geführt sind.

3. Vorrichtung nach Anspruch 1 oder 2, **dadurch gekennzeichnet, dass** die Mitnehmerschienen (13) oder Stollen der Sortiereinrichtung (3) länger als die zu sortierenden Würste (21) sind, so dass mehrere Würste (21) hintereinander in eine Mitnehmerschiene (13) oder einen Stollen aufnehmbar sind, und dass eine Verschiebeeinrichtung (19) vorgesehen ist, mittels der die Würste (21) einer Mitnehmerschiene (13) oder einen Stollen zum Übergeben an die erste Fördereinrichtung (4) längs der Mitnehmerschiene (13) oder einen Stollen verschiebbar sind.

4. Vorrichtung nach Anspruch 3, **dadurch gekennzeichnet, dass** die Verschiebeeinrichtung (19) als senkrecht zur Förderrichtung des Trums (17) umlaufendes Band oder Gurt (20) ausgeführt ist.

5. Vorrichtung nach einem der vorangehenden Ansprüche, **dadurch gekennzeichnet, dass** die Sortiereinrichtung (3) eine Abstreifeinrichtung (22) zum Abstreifen von überzähligen Würsten (21) aus einer Mitnehmerschiene (13) oder einen Stollen aufweist.

6. Vorrichtung nach Anspruch 5, **dadurch gekennzeichnet, dass** die Abstreifeinrichtung (22) ein rotierendes Paddel (23) ist.

7. Vorrichtung nach einem der vorangehenden Ansprüche, **dadurch gekennzeichnet, dass** der ersten Fördereinrichtung (4) eine Ausrichteinrichtung (28) zum seitlichen Ausrichten der in den Einzelstollen (26) aufgenommenen Würste (21) zugeordnet ist.

8. Vorrichtung nach Anspruch 7, **dadurch gekennzeichnet, dass** die Ausrichteinrichtung (28) ein oder zwei an beiden Seiten der ersten Fördereinrichtung (4) angeordnete, zahnradartige Drehräder (29) aufweist, das oder die mit an den Würsten (21) angreifenden Ausrichtabschnitten (30) in die Einzelstollen oder Mitnehmerschienen eingreifen.

9. Vorrichtung nach einem der vorangehenden Ansprüche, **dadurch gekennzeichnet, dass** die Gruppiereinrichtung (5) wenigstens eine um eine senkrecht zur Förderrichtung der ersten Fördereinrichtung (4) stehende Achse (34) drehend antreibbare Trommel (32, 33) aufweist, in die die eine Gruppe bildenden Würste (21) von der ersten Fördereinrichtung (4) gegeben werden und aus der die Würste (21) in den jeweiligen Aufnahmeabschnitt (41) gegeben werden.

10. Vorrichtung nach Anspruch 9, **dadurch gekennzeichnet, dass** zwei um dieselbe Achse (34) drehende, hintereinander geschaltete und separat antreibbare Trommeln (32, 33) vorgesehen sind.

11. Vorrichtung nach Anspruch 9 oder 10, **dadurch gekennzeichnet, dass** der oder den Trommeln (32, 33) eine feststehender, bogenförmiger Führungsabschnitt (38) zugeordnet ist, wobei die nacheinander an die Trommel (32, 33) übergebenen Würste (21) sich hintereinander zwischen der Trommel (32, 33) und dem Führungsabschnitt (38) aneinanderreihen.

12. Vorrichtung nach Anspruch 11, **dadurch gekennzeichnet, dass** die Trommel (32, 33) während der Wurstaufgabe getaktet dreht, bis alle Würste (21) aufgenommen sind, wonach die zur Abgabe der Würste (21) weiterdreht.

13. Vorrichtung nach einem der Ansprüche 9 bis 12, **dadurch gekennzeichnet, dass** der ersten Fördereinrichtung (4) ein Sensor (31) zur Erfassung des Beladezustands der Einzelstollen (26) zugeordnet ist, wobei der Antrieb der oder beider Trommeln (32, 33) in Abhängigkeit des Erfassungsergebnisses steuerbar ist.

14. Vorrichtung nach einem der Ansprüche 9 bis 13, **dadurch gekennzeichnet, dass** der bogenförmige Führungsabschnitt (38) oberhalb der zweiten Fördereinrichtung (6) mündet.

15. Vorrichtung nach einem der vorangehenden Ansprüche, **dadurch gekennzeichnet, dass** die Transfereinrichtung (7) ein Delta-Roboter (43) ist.

16. Vorrichtung nach Anspruch 15, **dadurch gekennzeichnet, dass** die Greifereinrichtung (44) vier in rechteckiger Anordnung positionierte Greifelemente (46, 47, 48, 49) zum Greifen der eine rechteckige Grundform aufweisenden Wurstgruppe (42) aufweist, wobei wenigstens drei Greifelemente (46, 47, 48, 49) schwenkbar sind.

17. Vorrichtung nach Anspruch 16, **dadurch gekennzeichnet, dass** die Greifelemente (46, 47, 48, 49) jeweils mehrere gebogene Greifabschnitte (51) aufweisen.

18. Vorrichtung nach Anspruch 17, **dadurch gekennzeichnet, dass** die beiden einander gegenüberliegend angeordneten Greifelemente (46,48), die an den Enden der Würste (21) angreifen, eine der Wurstanzahl entsprechende Anzahl an Greifabschnitten (51) aufweisen.

## Claims

1. Device for handling individual sausages, comprising
- a sorting device (3) comprising a conveyor belt (12) which circulates in an approximately triangular geometry, has cleats or driver rails (13) and on which the sausages (21), which are loosely charged on an ascending strand (14) of the conveyor belt (12), are individually distributed into the cleats or driver rails (13),
- a revolving first conveying device (4) which accepts the sorted sausages (21) and has individual cleats (26) or driver rails, wherein in each case an individual cleat (26) or a driver rail receives a sausage (21),
- a grouping device (5) in which the sausages (24) transported thereto by the first conveying device (4) are combined into groups (42),
- a second conveying device (6) having receiving portions (41) which receive the sausages (21) in each case of a group (42) and into which the sausages (21) are transferred, lying next to one another, from the grouping device (5),
- a transfer device (7) comprising a gripper device (44) for gripping a sausage group (42) and transferring and depositing the sausage group (42) into a receiving container (45).

2. Device according to Claim 1, **characterized in that** a guide device arranged below the preferably substantially horizontally extending strand (17) of the conveyor belt (12) is provided for the sausages (21) received in the downwardly open driver rails (13) or cleats, by means of which guide device the sausages (21) are guided until being transferred to the first conveying device (4) arranged adjacent to the strand (17).

3. Device according to Claim 1 or 2, **characterized in that** the driver rails (13) or cleats of the sorting device (3) are longer than the sausages (21) to be sorted, with the result that a plurality of sausages (21) can be received behind one another in a driver rail (13) or a cleat, and **in that** a displacing device (19) is provided by means of which the sausages (21) of a driver rail (13) or a cleat can be displaced along the driver rail (13) or a cleat for transfer to the first conveying device (4).

4. Device according to Claim 3, **characterized in that** the displacing device (19) is configured as a belt or strap (20) which revolves perpendicularly to the conveying direction of the strand (17).

5. Device according to one of the preceding claims, **characterized in that** the sorting device (3) has a stripping device (22) for stripping excess sausages (21) from a driver rail (13) or a cleat.

6. Device according to Claim 5, **characterized in that** the stripping device (22) is a rotating paddle (23).

7. Device according to one of the preceding claims, **characterized in that** the first conveying device (4) is assigned an orienting device (28) for laterally orienting the sausages (21) received in the individual cleats (26).

8. Device according to Claim 7, **characterized in that** the orienting device (28) has one or two gearwheel-like rotary wheels (29) arranged on both sides of the first conveying device (4), which rotary wheel or wheels engages or engage in the individual cleats or driver rails by way of orienting portions (30) acting on the sausages (21).

9. Device according to one of the preceding claims, **characterized in that** the grouping device (5) has at least one drum (32, 33) which can be driven to rotate about an axis (34) which is perpendicular to the conveying direction of the first conveying device (4), into which drum the sausages (21) forming a group are loaded by the first conveying device (4) and from which drum the sausages (21) are loaded into the respective receiving portion (41).

10. Device according to Claim 9, **characterized in that** two drums (32, 33) which rotate about the same axis (34) are connected behind one another and can be driven separately are provided.

11. Device according to Claim 9 or 10, **characterized in that** a fixed, arcuate guide portion (38) is assigned to the drum or the drums (32, 33), wherein the sausages (21) transferred successively to the drum (32, 33) row up behind one another between the drum (32, 33) and the guide portion (38).

12. Device according to Claim 11, **characterized in that** the drum (32, 33) rotates in a cycled manner during the sausage-charging process until all the sausages (21) are received, after which the rotates further to discharge the sausages (21).

13. Device according to one of Claims 9 to 12, **characterized in that** the first conveying device (4) is assigned a sensor (31) for detecting the loading state of the individual cleats (26), wherein the drive of the drum or both drums (32, 33) can be controlled in dependence on the detection result.

14. Device according to one of Claims 9 to 13, **characterized in that** the arcuate guide portion (38) opens above the second conveying device (6).

15. Device according to one of the preceding claims, **characterized in that** the transfer device (7) is a delta robot (43).

16. Device according to Claim 15, **characterized in that** the gripper device (44) has four gripping elements (46, 47, 48, 49) positioned in a rectangular arrangement and intended for gripping the sausage group (42) which has a rectangular outline, wherein at least three gripping elements (46, 47, 48, 49) are pivotable.

17. Device according to Claim 16, **characterized in that** the gripping elements (46, 47, 48, 49) each have a plurality of curved gripping portions (51).

18. Device according to Claim 17, **characterized in that** the two mutually oppositely arranged gripping elements (46, 48) which act on the ends of the sausages (21) have a number of gripping portions (51) which corresponds to the number of sausages.

## Revendications

1. Dispositif de traitement de saucisses individuelles, comprenant
- un dispositif de tri (3) comprenant une bande transporteuse (12) en circulation avec une géométrie approximativement triangulaire, présentant des tunnels ou des rails d'entraînement (13), sur laquelle les saucisses (21) chargées en vrac sur un tronçon ascendant (14) de la bande transporteuse (12) sont réparties individuellement dans les tunnels ou les rails d'entraînement (13),
- un premier dispositif de transport en circulation (4) reprenant les saucisses triées (21), avec des tunnels individuels (26) ou des rails d'entraînement, un tunnel individuel (26) ou un rail d'entraînement recevant à chaque fois une saucisse (21),
- un dispositif de regroupement (5) dans lequel les saucisses (21) transportées depuis le premier dispositif de transport (4) sont réunies en groupes (42),
- un deuxième dispositif de transport (6) avec des sections de réception (41) recevant les saucisses (21) d'un groupe respectif (42), dans lesquelles sections de réception les saucisses (21) sont transférées les unes à côté des autres depuis le dispositif de regroupement (5),
- un dispositif de transfert (7) comprenant un dispositif de préhension (44) pour saisir un groupe de saucisses (42) et pour transférer et introduire le groupe de saucisses (42) dans un récipient (45).

2. Dispositif selon la revendication 1, **caractérisé en ce qu'**un dispositif de guidage disposé en dessous du tronçon (17) de la bande transporteuse (12) s'étendant de préférence essentiellement horizontalement est prévu pour les saucisses (21) reçues dans les rails d'entraînement (13) ouverts vers le bas ou dans les tunnels, par le biais duquel dispositif de guidage les saucisses (21) sont guidées jusqu'à leur transfert au premier dispositif de transport (4) adjacent au tronçon (17).

3. Dispositif selon la revendication 1 ou 2, **caractérisé en ce que** les rails d'entraînement (13) ou les tunnels du dispositif de tri (3) sont plus longs que les saucisses à trier (21), de telle sorte que plusieurs saucisses (21) puissent être reçues les unes derrière les autres dans un rail d'entraînement (13) ou un tunnel et **en ce qu'**un dispositif de déplacement (19) est prévu, au moyen duquel les saucisses (21) d'un rail d'entraînement (13) ou d'un tunnel peuvent être déplacées en vue de leur transfert au premier dispositif de transport (4) le long du rail d'entraînement (13) ou d'un tunnel.

4. Dispositif selon la revendication 3, **caractérisé en ce que** le dispositif de déplacement (19) est réalisé sous forme de bande ou de courroie (20) en circulation perpendiculairement par rapport à la direction de transport du tronçon (17).

5. Dispositif selon l'une quelconque des revendications précédentes, **caractérisé en ce que** le dispositif de tri (3) présente un dispositif de raclage (22) pour racler des saucisses en surnombre (21) hors d'un rail d'entraînement (13) ou d'un tunnel.

6. Dispositif selon la revendication 5, **caractérisé en ce que** le dispositif de raclage (22) est une pale rotative (23).

7. Dispositif selon l'une quelconque des revendications précédentes, **caractérisé en ce qu'**un dispositif d'orientation (28) pour l'orientation latérale des saucisses (21) reçues dans les tunnels individuels (26) est associé au premier dispositif de transport (4).

8. Dispositif selon la revendication 7, **caractérisé en ce que** le dispositif d'orientation (28) présente une ou deux roues de rotation de type roues dentées (29) disposées au niveau des deux côtés du premier dispositif de transport (4), laquelle ou lesquelles viennent en prise dans les tunnels individuels ou les rails d'entraînement avec des portions d'orientation (30) venant en contact avec les saucisses (21).

9. Dispositif selon l'une quelconque des revendications précédentes, **caractérisé en ce que** le dispositif de regroupement (5) présente au moins un tambour (32, 33) pouvant être entraîné en rotation autour d'un axe (34) perpendiculaire à la direction de transport du premier dispositif de transport (4), dans lequel sont déposées les saucisses (21) formant un groupe provenant du premier dispositif de transport (4) et depuis lequel les saucisses (21) sont déposées dans la portion de réception respective (41).

10. Dispositif selon la revendication 9, **caractérisé en ce que** deux tambours (32, 33) tournant autour du même axe (34), montés l'un derrière l'autre et pouvant être entraînés séparément sont prévus.

11. Dispositif selon la revendication 9 ou 10, **caractérisé en ce qu'**une portion de guidage fixe de forme courbe (38) est associée au (x) tambour (s) (32, 33), les saucisses (21) transférées les unes après les autres aux tambours (32, 33) s'alignant les unes derrière les autres entre le tambour (32, 33) et la portion de guidage (38).

12. Dispositif selon la revendication 11, **caractérisé en ce que** les tambours (32, 33) sont tournés de manière cadencée pendant le chargement des saucisses jusqu'à ce que toutes les saucisses (21) soient reçues, après quoi les continuent de tourner pour décharger les saucisses (21).

13. Dispositif selon l'une quelconque des revendications 9 à 12, **caractérisé en ce qu'**un capteur (31) pour détecter l'état de chargement des tunnels individuels (26) est associé au premier dispositif de transport (4), l'entraînement du tambour ou des deux tambours (32, 33) pouvant être commandé en fonction du résultat de la détection.

14. Dispositif selon l'une quelconque des revendications 9 à 13, **caractérisé en ce que** la portion de guidage de forme courbe (38) débouche au-dessus du deuxième dispositif de transport (6).

15. Dispositif selon l'une quelconque des revendications précédentes, **caractérisé en ce que** le dispositif de transfert (7) est un robot delta (43).

16. Dispositif selon la revendication 15, **caractérisé en ce que** le dispositif de préhension (44) présente quatre éléments de préhension (46, 47, 48, 49) positionnés suivant un agencement rectangulaire, pour la préhension du groupe de saucisses (42) présentant une forme de base rectangulaire, au moins trois éléments de préhension (46, 47, 48, 49) pouvant pivoter.

17. Dispositif selon la revendication 16, **caractérisé en ce que** les éléments de préhension (46, 47, 48, 49) présentent à chaque fois plusieurs portions de préhension courbes (51).

18. Dispositif selon la revendication 17, **caractérisé en ce que** les deux éléments de préhension (46, 48) disposés en regard l'un de l'autre, qui viennent en prise au niveau des extrémités des saucisses (21), présentent un nombre de portions de préhension (51) correspondant au nombre de saucisses.
